# EUROPÄISCHE PATENTSCHRIFT

(11) **EP 2 534 985 B1**
(45) Veröffentlichungstag und Bekanntmachung des Hinweises auf die Patenterteilung: **13.11.2013**
(21) Anmeldenummer: 12171460.4
(22) Anmeldetag: 11.06.2012
(51) Int. Cl.: A47J 31/36, A47J 31/44, A47J 31/52

(54) **Brüheinrichtung eines Kaffeeautomatens**
Brewing device of a coffee machine
Dispositif-infuseur d'un automate à café

(30) Priorität: 16.06.2011 DE 102011077627
(43) Veröffentlichungstag der Anmeldung: 19.12.2012
(73) Patentinhaber: WMF WÜRTTEMBERGISCHE METALLWARENFABRIK AG, 73309 Geislingen/Steige (DE)
(72) Erfinder: Kiefer, Alexander, 73329 Kuchen (DE); Arndt, Peter, 89134 Blaustein (DE); Albert, Heinz, 89150 Laichingen (DE); Grupp, Martin, 73257 Köngen (DE); Gussmann, Jochen, 73527 Schwäbisch-Gmünd (DE); Startz, Armin, 89197 Weidenstetten (DE); Grimm, Rolf, 73072 Donzdorf (DE); Stohrer, Helmut, 89075 Ulm (DE)
(74) Vertreter: BRP Renaud & Partner

(56) Entgegenhaltungen:
- WO-A1-2008/105017
- DE-A1-102009 035 534
- DE-U1-202007 005 791
- US-A1- 2005 193 891

## Beschreibung

Die vorliegende Erfindung betrifft eine Brüheinrichtung eines Kaffeeautomatens mit einer Antriebseinrichtung zum Antrieb zumindest eines beweglichen Teils der Brüheinrichtung gemäß dem Oberbegriff des Anspruchs 1. Die Erfindung betrifft außerdem einen mit einer derartigen Brüheinrichtung ausgestatteten Kaffeeautomaten.

Gattungsgemäße Brüheinrichtungen sind aus gängigen Kaffeeautomaten hinlänglich bekannt und bedienen sich derzeit üblicherweise unterschiedlicher Arten einer Ansteuerung. Eine erste Alternative hierzu ist eine Normierung der Brüheinrichtung sowie ein Betreiben über eine entsprechende Zeitsteuerung, wogegen eine zweite Alternative ebenfalls ein Normieren der Brüheinrichtung sowie zusätzlich ein gesteuertes Fahren durch Zählen von Impulsen darstellt. Diese Impulse werden beispielsweise durch einen Impulsgeber (z.B. eine Taktscheibe, Lichtschranke oder einen Magneten) erzeugt. Zusätzlich zu dieser Ansteuerung wird bei einigen Anwendungen unabhängig von den oben genannten Wegsteuerungen, der Antriebsstrom mittels Stromsenor erfasst, um die Anpresskräfte zu begrenzen und bei Überschreiten eines vorgegebenen Grenzwertes eine Fehlermeldung auszugeben und gegebenenfalls den weiteren Betrieb zu unterbinden. Durch den Umstand, dass jedoch Impulse generiert und gezählt werden, kann keine Drehrichtung erkannt werden und die Auflösung ist abhängig und fest vorgegeben von der Anzahl der Schlitze bzw. Magnete je Umdrehung. Kommt die Brüheinrichtung exakt an einer Flanke des Impulsgebers zum Stehen, können bereits kleinste Vibrationen Flankensprünge erzeugen, die von der Steuerung als Impulse gewertet werden, ohne dass jedoch eine Bewegung stattgefunden hat. Durch eine indirekte Erfassung der Impulse am Antriebsmotor, das heißt dem Elektromotor, oder einer zugeschalteten Getriebeeinheit werden jedoch auch Impulse erzeugt, sofern die Brüheinrichtung überhaupt nicht montiert ist, nicht im Eingriff steht oder eine Kopplung defekt ist.

Das Dokument WO-2008/105017 offenbart eine Brüheinrichtung gemäß dem Oberbegriff des Anspruchs 1.

Die vorliegende Erfindung beschäftigt sich daher mit dem Problem, für eine Brüheinrichtung eine verbesserte oder zumindest eine alternative Ausführungsform anzugeben, die eine zuverlässige Erfassung der Position eines beweglichen Teils der Brüheinrichtung, wie beispielsweise einer Brühkammer, über den gesamten Verfahrweg ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer an sich bekannten Brüheinrichtung eines Kaffeeautomatens zwei separat arbeitende Sensoren vorzusehen, wobei der erste Sensor zur Erfassung einer Stellung eines beweglichen Teils der Brüheinrichtung vorgesehen ist, wogegen der zweite Sensor eine zur jeweiligen Stellung bzw. zum jeweiligen Verstellweg gehörende Leistungsaufnahme einer Antriebseinrichtung, beispielweise eine Stromaufnahme eines Elektromotors (Stellantrieb) erfasst. Über die Antriebseinrichtung, die generell auch pneumatisch oder hydraulisch arbeiten kann, wird dabei der zumindest eine bewegliche Teil der Brüheinrichtung angetrieben. Zusätzlich ist erfindungsgemäß eine Auswerteeinrichtung vorgesehen, die die vom ersten und zweiten Sensor erfassten Signale auswertet, mit einem Sollwert vergleicht und bei einer vordefinierten Soll-Ist-Abweichung ein Warnsignal erzeugt und an einer Anzeigeeinrichtung einen Hinweis oder eine Meldung anzeigt. Denkbar ist selbstverständlich auch, dass eine entsprechende Meldung in einem Fehlerspeicher hinterlegt, das heißt abgespeichert wird. Der bewegliche Teil kann dabei eine Spindel, ein bewegliches Teil des Brühers oder eine Verstelleinrichtung sein, wobei an dieser Spindel beispielsweise zumindest ein Magnet angeordnet ist, der ein Magnetfeld erzeugt und der erste Sensor demnach ein Magnetfeldsensor, insbesondere als Drehwinkelsensor ausgebildet ist und das sich beim Drehen der Spindel verändernde Magnetfeld erfasst. Ein mit dem verändernden Magnetfeld korrelierendes Spannungssignal wird dabei vom ersten Sensor an die Auswerteeinrichtung übermittelt. Bei der Drehung des Magneten von 0 bis 360° hebt somit der erste Sensor sein Ausgangssignal von einer minimalen Spannung bis zu einer maximalen Spannung an, was bedeutet, dass diese Spannungen exakt zu den jeweiligen Winkelstellungen der Spindel korrelieren. Die Geschwindigkeit mit der die Spannung ansteigt oder fällt gibt darüber hinaus die Drehzahl wieder, wobei fallende oder steigende Spannungen zugleich die Drehrichtung anzeigen. Entfernt sich der Magnet aus dem Erfassungsbereich des ersten Sensors, nimmt er eine Signallage außerhalb des Spannungsbereichs für die Winkelmessung (wahlweise oberhalb oder unterhalb) ein. Dadurch kann erfasst werden, ob beispielweise der Brüher montiert ist. Das vom ersten Sensor ausgesandte Signal muss dabei nicht zwangsweise analog sein, es kann auch von anderer Art, wie beispielsweise Frequenz oder einem digitalen Datensatz sein. Als weiteres wichtiges Merkmal kann in Verbindung mit dem zweiten Sensor parallel zum Stellweg der hierfür vom Elektromotor benötigte Strom, bzw. die von der Antriebseinrichtung benötigte Leistung, erfasst, aufgezeichnet und zugleich auf Plausibilität geprüft werden. Insbesondere rollierende oder fortlaufende Aufzeichnungen der Werte und Bildung von Mittelwerten dienen dabei als Basis zum Vergleich und zur Bewertung von Einzelereignissen der aktuellen Brühung. Des Weiteren können selbstverständlich auch andere Systeminformationen (z.B. Volumenstrom bei der Brühung) mitgeschrieben werden, um so ein Prozessabbild zu erstellen. Durch die vom ersten und zweiten Sensor an die Auswerteeinrichtung übermittelten Spannungssignale ist diese in der Lage mittels eines Soll-Ist-Wertvergleiches nicht tolerierbare Soll-Ist-Wertabweichungen zu erkennen und hierzu entsprechende Warn- bzw. Fehlermeldungen zu erzeugen, auszuwerfen und/oder zu hinterlegen. Selbstverständlich ist dabei klar, dass die Erfassung des Verstellweges nicht zwingend über einen Drehwinkelsensor erfolgen muss, sondern auch beispielsweise mittels eines linearen Wegmessers oder ähnlichem erfolgen kann. Wichtig ist dabei lediglich, dass die Messung des Verstellweges und der von der Antriebseinrichtung aufgenommenen Leistung von zwei unabhängigen Sensoren und dadurch von zwei unabhängigen Messsystemen erfolgt.

Generell bietet die erfindungsgemäße Brüheinrichtung folgende wesentliche Vorteile:
- eine direkte Messung am bewegten Teil, insbesondere an der Spindel oder der Verstelleinrichtung,
- eine berührungslose Messung,
- Messung der Drehzahl und somit auch der Verstellgeschwindigkeit,
- Erkennung der Bewegungsrichtung des beweglichen Teils,
- Erkennung der Position des beweglichen Teils
- eine Erkennung von Schwergängigkeiten,
- Erkennung von Verschleiß,
- Erkennung von Dichtungsverschleiß,
- Erkennung von Fehlerzuständen bevor ein Schaden eintritt, verbunden mit einem eventuellen Umschalten auf einen Notbetrieb,
- Generieren von Warnhinweisen oder Meldungen für den Kunden bzw. Kundendiensttechniker.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Brüheinrichtung eines im Übrigen lediglich angedeuteten Kaffeeautomatens,
- Fig. 2: eine Detailschnittdarstellung durch die erfindungsgemäße Brüheinrichtung.

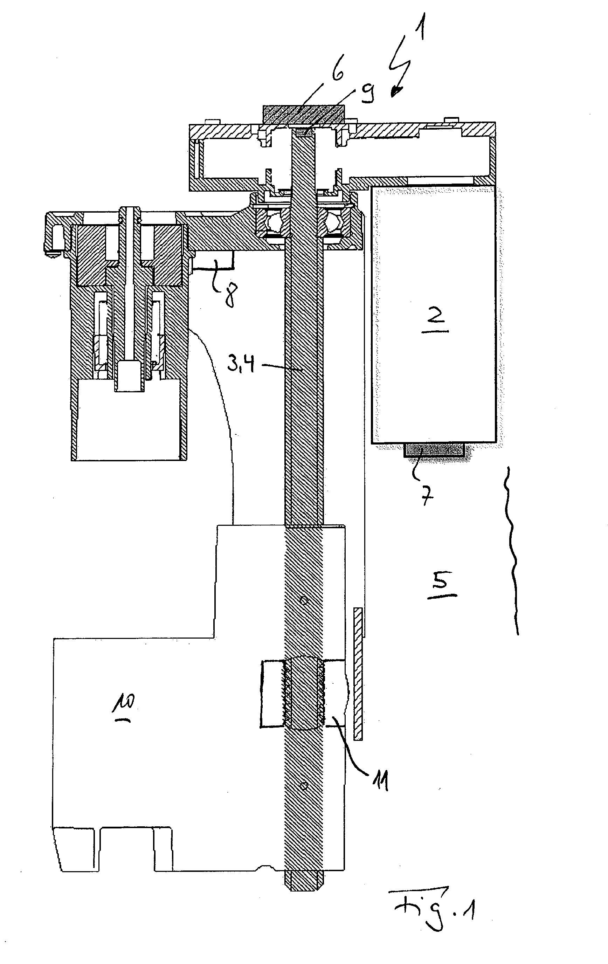

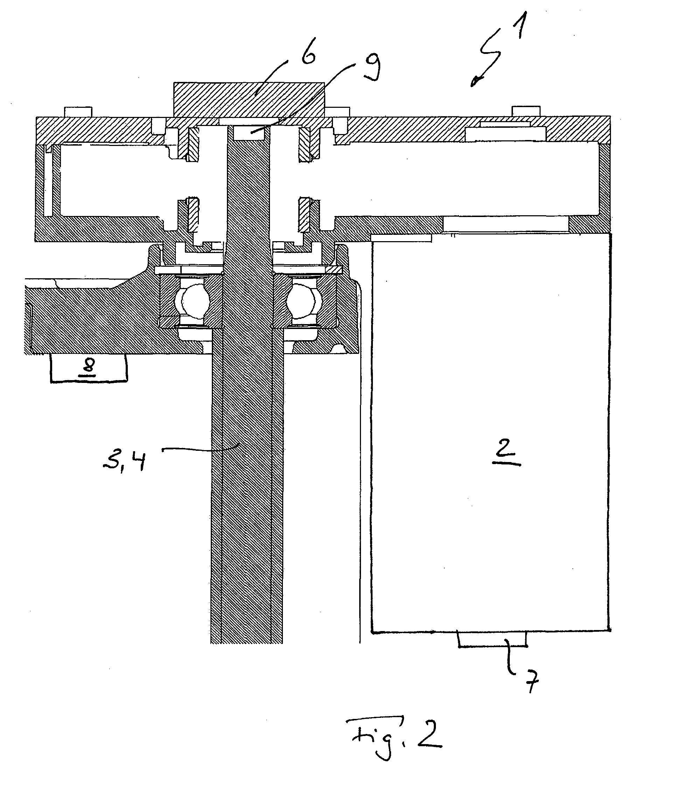

Entsprechend den Fig. 1 und 2, weist eine erfindungsgemäße Brüheinrichtung 1 eine Antriebseinrichtung 2, beispielsweise einen Elektromotor oder einen hydraulisch oder pneumatischen Antrieb, zum Antrieb zumindest eines beweglichen Teils 3 der Brüheinrichtung 1, hier einer Spindel 4, auf. Die Brüheinrichtung 1 wird dabei üblicherweise in einem Kaffeeautomaten 5 eingesetzt und dient zur Herstellung von frischem, wohlschmeckenden Kaffee und Kaffeemischgetränken. Erfindungsgemäß weist nun die Brüheinrichtung 1 zwei Sensoren 6,7, nämlich einen ersten Sensor 6 sowie einen zweiten Sensor 7 auf. Der erste Sensor 6 ist dabei zur Erfassung einer Stellung des beweglichen Teils 3, das heißt zur Erfassung einer Drehstellung der Spindel 4 ausgebildet, wogegen der zweite Sensor 7 zur Erfassung einer zur jeweiligen Stellung bzw. zum jeweiligen Verstellweg gehörenden Leistungsaufnahme der Antriebseinrichtung 2, das heißt beispielsweise der Stromaufnahme des Elektromotors ausgebildet ist. Zugleich ist eine Auswerteeinrichtung 8 vorgesehen, die die vom ersten und zweiten Sensor 6, 7 erfassten und übermittelten (Spannungs-)Signale auswertet, mit einem Sollwert vergleicht und bei einer vordefinierten Soll-Ist-Wertabweichung ein Warnsignal oder eine Meldung erzeugt und an einer Anzeigeeinrichtung des Kaffeeautomatens 5 anzeigt. Der erste Sensor 6 ist demzufolge als Drehwinkelsensor ausgebildet.

Zur Erfassung der Drehwinkelstellung des beweglichen Teils 3, das heißt der Spindel 4, ist an dieser zumindest ein Magnet 9 angeordnet, wobei der als Drehwinkelsensor ausgebildete erste Sensor 6 das sich beim Drehen der Spindel veränderte Magnetfeld erfasst und ein damit korrelierendes Signal, insbesondere ein Spannungssignal, an die Auswerteeinrichtung 8 übermittelt. Die Auswerteeinrichtung 8 ist darüber hinaus in der Lage, aufgrund der Änderung des vom zweiten Sensor 7 übermittelten Signals eine Verstellgeschwindigkeit sowie eine Drehrichtung der Spindel 4 zu erfassen. Darüber hinaus kann die Auswerteeinrichtung 8 aufgrund des Vorhandenseins des Signals bzw. des Spannungssignals des Magneten 9 auf eine Anwesenheit der Spindel 4 bzw. einer damit verbundenen Brühkammer 10 schließen. Die Brühkammer 10 ist dabei Teil eines Brühers, der über eine entsprechende Spindelmutter 11 mit der Spindel 4 verbunden ist. Dreht sich demzufolge die Spindel 4 um deren Achse, so wird aufgrund der Spindelmutter 11 die Brühkammer 10 nach oben bzw. unten verstellt.

Mit der erfindungsgemäßen Brüheinrichtung 1 ist es möglich, die Erfassung der Position der Brühkammer 10 über den gesamten Verfahrweg exakt zu gewährleisten sowie die Drehrichtung der Spindel 4 unmittelbar zu erkennen und zwar unabhängig von der Antriebseinrichtung 2, beispielsweise dem Elektromotor. Der erste Sensor 6 erfasst dabei die Winkelstellung und gibt diese in Form eines Signals, speziell in Form eines analogen Spannungssignals, aus. Bei der Drehung des Magneten 9 von 0 bis 360° hebt der erste Sensor 6 sein Ausgangssignal von einer minimalen Spannung bis zu einer maximalen Spannung an, wobei die einzelnen Spannungen exakt zu den Winkelstellungen der Spindel 4 korrelieren. Die Geschwindigkeit mit der die Spannung ansteigt oder fällt gibt darüber hinaus die Drehzahl bzw. die Verstellgeschwindigkeit wieder, wobei fallende oder steigende Spannungen zugleich die Drehrichtung der Spindel 4 anzeigen. Entfernt sich dabei der Magnet 9 aus dem Erfassungsbereich des ersten Sensors 6, nimmt er eine Signallage außerhalb des Spannungsbereichs für die Winkelmessung ein, woraus geschlossen werden kann, ob die Brüheineinheit, das heißt beispielsweise ein Brüher bzw. die Brühkammer 10 montiert ist oder nicht. In Verbindung dem vom zweiten Sensor 7 erfassten und parallel zum Weg benötigten Strom des Elektromotors 2 lassen sich die ersten Sensor 6 vom zweiten Sensor 7 erzeugten Signale aufzeichnen und zugleich auf Plausibilität prüfen. Insbesondere rollierende oder fortlaufende Aufzeichnungen der Werte und Bildung von Mittelwerten dienen dabei als Basis zum Vergleich und zur Bewertung von Einzelereignissen einer aktuellen Brühung. Des Weiteren können selbstverständlich auch weitere Systeminformationen, wie beispielsweise ein Volumenstrom bei der Brühung, erfasst und mitgeschrieben und dadurch ein Prozessabbild erstellt werden. Hierzu kann beispielsweise ein nicht näher bezeichneter dritter Sensor zur Erfassung des beim Brühvorgang strömenden Volumenstroms vorgesehen sein. Die Auswerteeinrichtung 8 ist dabei in der Lage, dass sie die vom ersten Sensor 6, vom zweiten Sensor 7 und zugleich vom dritten Sensor erfassten Signale auswertet, mit einem Sollwert vergleicht und bei einer vordefinierten Soll-Ist-Abweichung ein Warnsignal oder eine Meldung erzeugt.

Mit der erfindungsgemäßen Brüheinrichtung 1 ist es insbesondere möglich, eine berührungslose Erfassung des Weges der Brühkammer 10 zu erreichen, wobei aufgrund der unabhängig voneinander arbeitenden Sensoren 6 und 7 eine zuverlässige Überwachung der einwandfreien Funktion der Brüheinrichtung 1 gewährleistet werden kann. Denkbar ist auch ein Umschalten in einen Notbetrieb, in welchem bspw. einzelne Funktionen, wie zum Beispiel die Zubereitung eines Espressos, nicht mehr zur Verfügung stehen. Insbesondere kann der erste Sensor 6 die Drehrichtung der Spindel 4 erkennen, wogegen der zweite Sensor 7 beispielsweise Schwergängigkeiten erkennt, sofern die von ihm erfassten Leistungswerte (Stromwerte) über Zeit hin ansteigen. Ebenfalls ist eine Erkennung von Verschleiß durch den zweiten Sensor 7 möglich. Mit der erfindungsgemäßen Brüheinrichtung 1 ist somit eine nahezu umfassende Kontrolle möglich.

## Patentansprüche

1. Brüheinrichtung (1) mit einer Antriebseinrichtung (2) zum Antrieb zumindest eines beweglichen Teils (3) der Brüheinrichtung (1) sowie mit einem zweiten Sensor (7) zur Erfassung einer Leistungsaufnahme der Antriebseinrichtung (2),
**dadurch gekennzeichnet,**
- **dass** ein erster Sensor (6) zur Erfassung einer Stellung des beweglichen Teils (3) der Brüheinrichtung (1) vorgesehen ist,
- **dass** der zweiter Sensor (7) zur Erfassung einer zur jeweiligen Stellung bzw. zum jeweiligen Verstellweg gehörenden Leistungsaufnahme der Antriebseinrichtung (2) vorgesehen ist,
- **dass** eine Auswerteeinrichtung (8) vorgesehen ist, die die vom ersten und zweiten Sensor (6,7) erfassten Signale auswertet, mit einem Sollwert vergleicht und bei einer vordefinierten Soll-Ist-Wertabweichung ein Warnsignal oder eine Meldung erzeugt, anzeigt oder hinterlegt.

2. Brüheinrichtung nach Anspruch 1,
**dadurch gekennzeichnet,**
**dass** der erste Sensor (6) berührungslos arbeitet.

3. Brüheinrichtung nach Anspruch 1 oder 2,
**dadurch gekennzeichnet,**
**dass** das bewegliche Teil (3) eine Verstelleinrichtung, eine Spindel (4) oder eine Brühkammer/Brüheinrichtung (10) ist.

4. Brüheinrichtung nach Anspruch 3,
**dadurch gekennzeichnet,**
**dass** die Verstelleinrichtung oder die Spindel (4) zumindest ein Magnetfeld, insbesondere erzeugt durch einen Magneten (9), aufweist und der erste Sensor (6) als Magnetfeldsensor ausgebildet ist, der das durch Bewegung sich ändernde Magnetfeld erfasst und ein damit korrelierendes Signal, insbesondere ein Spannungssignal, eine Frequenz oder einen digitalen Datensatz, an die Auswerteinrichtung (8) übermittelt.

5. Brüheinrichtung nach Anspruch 4,
**dadurch gekennzeichnet,**
**dass** die Auswerteeinrichtung (8) aufgrund der Änderung des Sensorsignals eine Verstellgeschwindigkeit und/oder eine Bewegungsrichtung, insbesondere eine Drehrichtung der Spindel (4), erfasst.

6. Brüheinrichtung nach Anspruch 4 oder 5,
**dadurch gekennzeichnet,**
**dass** die Auswerteeinrichtung (8) aufgrund des Vorhandenseins des Sensorsignals eine Anwesenheit der Verstelleinrichtung bzw. Spindel (4) bzw. der Brühkammer/Brüheinrichtung (10) erkennt.

7. Brüheinrichtung nach einem der Ansprüche 1 bis 6,
**dadurch gekennzeichnet,**
- **dass** das erzeugte Warnsignal ein Wartungssignal ist, und/oder
- **dass** das erzeugte Warnsignal ein akustisches, ein optisches Warnsignal oder eine schriftliche/bildliche Meldung ist.

8. Brüheinrichtung nach einem der Ansprüche 1 bis 7,
**dadurch gekennzeichnet,**
**dass** ein dritter Sensor zur Erfassung eines Volumenstroms, insbesondere eines bei einem Brühvorgang, beim Warmspülen, beim Entkalken, beim Wasserbrühen oder beim Reinigen strömenden Volumenstroms, vorgesehen ist.

9. Brüheinrichtung nach Anspruch 8,
**dadurch gekennzeichnet,**
**dass** die Auswerteeinrichtung (8) derart ausgebildet ist, dass sie die vom ersten, zweiten und dritten Sensor (6,7) erfassten Signale auswertet, mit einem Sollwert vergleicht und bei einer vordefinierten Soll-Ist-Abweichung ein Warnsignal oder eine Meldung erzeugt, anzeigt oder hinterlegt.

10. Kaffeeautomat mit einer Brüheinrichtung (1) nach einem der vorhergehenden Ansprüche.

## Claims

1. A brewing device (1) comprising a drive device (2) for driving at least one movable part (3) of the brewing device (1) as well as comprising a second sensor (7) for detecting an input power of the drive device (2), **characterized in**
- **that** provision is made for a first sensor (6) for detecting a position of the movable part (3) of the brewing device (1),
- **that** the second sensor (7) is provided for detecting an input power of the drive device (2), which belongs to the respective position or to the respective adjustment travel, respectively,
- **that** provision is made for an evaluation device (8), which evaluates the signals detected by the first and second sensor (6, 7), compares them to a setpoint value and creates, displays or stores a warning signal or a message in response to a predefined setpoint-actual value deviation.

2. The brewing device according to claim 1,
**characterized in**
**that** the first sensor (6) operates in a contact-free manner.

3. The brewing device according to claim 1 or 2,
**characterized in**
**that** the movable part (3) is an adjusting device, a shaft (4) or a brewing chamber/brewing device (10).

4. The brewing device according to claim 3,
**characterized in**
**that** the adjusting device or shaft (4) encompasses at least one magnetic field, in particular created by means of a magnet (9), and the first sensor (6) is embodied as magnetic field sensor, which detects the magnetic field, which changes due to movement, and transmits a signal, which correlates thereto, in particular a voltage signal, a frequency or a digital data set, to the evaluation device (8).

5. The brewing device according to claim 4,
**characterized in**
**that**, due to the change of the sensor signal, the evaluation device (8) detects an adjusting speed and/or a direction of movement, in particular a rotating direction of the shaft (4).

6. The brewing device according to claim 4 or 5,
**characterized in**
**that**, due to the presence of the sensor signal, the evaluation device (8) identifies a presence of the adjusting device or shaft (4), respectively, or of the brewing chamber/brewing device (10), respectively.

7. The brewing device according to one of claims 1 to 6,
**characterized in**
- **that** the created warning signal is a maintenance signal and/or
- **that** the created warning signal is an acoustic, an optical warning signal or a visual/figurative message.

8. The brewing device according to one of claims 1 to 7,
**characterized in**
**that** provision is made for a third sensor for detecting a volume flow, in particular of a volume flow, which flows in response to a brewing process, in response to warm rinsing, in response to decalcifying, in response to the brewing of water or in response to cleaning.

9. The brewing device according to claim 8,
**characterized in**
**that** the evaluation device (8) is embodied such that it evaluates the signals, which are detected by the first, second and third sensor (6, 7), compares them to a setpoint value and creates, displays or stores a warning signal or a message in response to a predefined setpoint-actual deviation.

10. A coffee maker comprising a brewing device (1) according to one of the preceding claims.

## Revendications

1. Dispositif infuseur (1) avec un système d'entraînement (2) pour entraîner au moins une pièce (3) mobile du dispositif infuseur (1), ainsi qu'avec un deuxième capteur (7) pour détecter une puissance absorbée du système d'entraînement (2), **caractérisé en ce**
- **qu'**il est prévu un premier capteur (6) pour détecter une position de la pièce (3) mobile du dispositif infuseur (1),
- en ce que le deuxième capteur (7) est prévu pour détecter une puissance absorbée correspondant à une position respective ou à la course de réglage respective du système d'entraînement (2),
- en ce qu'il est prévu un dispositif d'évaluation (8) qui évalue les signaux détectés par le premier et le deuxième capteurs (6, 7), les compare avec une valeur de consigne et en cas d'un écart prédéfini entre la valeur de consigne et la valeur réelle, génère, affiche ou sauvegarde un signal d'alerte ou un message.

2. Dispositif infuseur selon la revendication 1, **caractérisé en ce que** le premier capteur (6) fonctionne sans contact.

3. Dispositif infuseur selon la revendication 1 ou la revendication 2, **caractérisé en ce que** la pièce (3) mobile est un système de réglage, une broche (4) ou une chambre d'infusion/un dispositif infuseur (10).

4. Dispositif infuseur selon la revendication 3, **caractérisé en ce que** le système de réglage ou la broche (4) comporte au moins un champ magnétique, généré notamment par un aimant (9) et **en ce que** le premier capteur (6) est conçu en tant que capteur de champ magnétique, qui détecte le champ magnétique se modifiant par déplacement et qui transmet au dispositif d'évaluation (8) un signal en corrélation avec ce dernier, notamment un signal de tension, une fréquence ou un bloc de données numériques.

5. Dispositif infuseur selon la revendication 4, **caractérisé en ce que** du fait de la modification du signal des capteurs, le dispositif d'évaluation (8) détecte une vitesse de réglage et/ou un sens de déplacement, notamment un sens de rotation de la broche (4).

6. Dispositif infuseur selon la revendication 4 ou la revendication 5, **caractérisé en ce que** du fait de la présence du signal des capteurs, le dispositif d'évaluation (8) identifie une présente du système de réglage ou de la broche (4) ou de la chambre d'infusion/du dispositif infuseur (10).

7. Dispositif infuseur selon l'une quelconque des revendications 1 à 6, **caractérisé en ce**
- **que** le signal d'alerte généré est un signal de maintenance et/ou
- **que** le signal d'alerte généré est un signal d'alerte acoustique, un signal d'alerte optique ou un message écrit/figuratif.

8. Dispositif infuseur selon l'une quelconque des revendications 1 à 7, **caractérisé en ce qu'**il est prévu un troisième capteur pour détecter un débit volumétrique, notamment un débit volumétrique circulant lors d'un processus d'infusion, d'un rinçage chaud, d'un détartrage ou d'un nettoyage.

9. Dispositif infuseur selon la revendication 8, **caractérisé en ce que** le dispositif d'évaluation (8) évalue les signaux détectés par le premier, le deuxième et le troisième capteurs (6, 7), les compare avec une valeur de consigne et en cas d'un écart prédéfini entre la valeur de consigne et la valeur réelle, génère, affiche ou sauvegarde un signal d'alerte ou un message.

10. Distributeur automatique de café avec un dispositif infuseur (1) selon l'une quelconque des revendications précédentes.
